# EUROPEAN PATENT APPLICATION

(11) **EP 4 645 219 A1**
(43) Date of publication of application: **05.11.2025**
(21) Application number: 24173879.8
(22) Date of filing: 02.05.2024
(51) Int. Cl.: G06T 7/00

(54) **METHOD OF GENERATING TRAINING DATA FOR TRAINING A MACHINE LEARNING MODEL FOR VISUAL INSPECTION OF PRODUCTS**

(71) Applicant: InspectifAI GmbH, 76131 Karlsruhe (DE)
(72) Inventor: Warnke, Sven, 76131 Karlsruhe (DE); Rumswinkel, Stephan, 76131 Karlsruhe (DE); Kronenbitter, Bastian, 76131 Karlsruhe (DE)
(74) Representative: Platzöder, Michael Christian

(57) **Abstract**

A method (200) of generating training data for training a machine learning model for visual product inspection is provided, wherein the training data are generated to comprise a plurality of first product images associated with a first class and a plurality of second product images associated with a second class. The method comprises obtaining a plurality of defect images (303), each representing at least one defect (305) that can occur in the product (300), wherein the plurality of defect images (303) is obtained in such a way to represent a plurality of different defects (305) that can occur in the product (300), and creating a plurality of combined images (304). The creating of the plurality of combined images (304) comprises obtaining a product image (302) representing a product (300) without a defect, combining the product image (302) with at least one defect image (303) of the plurality of defect images (303) to obtain a combined image (304) representing the product (300) with at least one defect (305), and associating the obtained combined image with the second class. The plurality of combined images (304) is added to the plurality of second product images.

## Description

The present invention relates to visual inspection methods in the field of quality control in production, which use an imaging system to obtain images and transfer them to a machine learning process for classification. Specifically, a method of generating training data for training a machine learning model, e.g., neural networks, for visual inspection of products is provided. The products may be pharmaceutical products or containers for filling such products.

Semi-automatic product inspection systems and fully automatic product inspection systems are known for inspecting products, particularly as part of quality control during or immediately after product manufacture. A semi-automatic machine is typically configured to transport the products to be inspected, in particular serially, and to present them to a human inspector in a suitable manner, so that the inspector can carry out a visual inspection of the products and can selectively control further handling of the product just inspected. In a fully automatic machine, the entire inspection process is automated, whereby the products to be inspected are inspected by sensors and, depending on the sensor data generated, an inspection result is generated, on the basis of which the further treatment of the respective inspected product takes place, in particular rejection as a defective part or further treatment as a good part.

The sensor data may include one or more images obtained by an imaging system, e.g., one or more cameras that are configured to capture images of a product to be inspected. The image or images can be evaluated by means of known computer vision techniques to detect defects in the product, such as cracks in a glass container, foreign particles in the product or the like. The correct classification is crucial in the field of production of pharmaceuticals to comply with legal requirements. In particular, the process shall be GMP ("Good Manufacturing Practice") compliant, which particularly includes the requirement to ensure the output of only good products. This, however, may lead to a high rate of "false rejects" when using conventional visual inspection methods.

Thus, in the field of visual (optical) inspection in production, the use of machine learning (ML) methods to improve inspection performance is becoming increasingly standard. In particular, deep learning methods in the form of neural networks may be used. However, large amounts of sample data (training data) are required to train the ML methods. In the case of automated visual inspection, these are images of medical or pharmaceutical products that are produced on an automated inspection system. Examples of both defective and non-defective (good) products are required to train supervised learning methods.

For the creation of images of non-defective products, manually inspected products are usually used. Artificially created defects are usually used to create images of defective products, for example by introducing foreign particles into the product or deliberately damaging the product. In order for an ML system to reliably distinguish between all variations of defective and non-defective products, the entire range of these variations must be mapped in the training data. This refers, for example, to the size, shape, position, or color of the defects. If there are gaps in the distribution of the properties of the defects, there is a risk that this type of defect will not be classified correctly. For example, if particles are only mapped in one region of the product in the training data, there is a risk that particles in other regions will not be correctly recognized.

The correct and complete representation of defect properties in the training data is therefore a crucial prerequisite for the successful use of supervised ML methods in visual inspection. However, the production of artificial, defective products is a time-consuming and costly process in the pharmaceutical environment. Using actual defects from production processes to create training data is usually not sufficient due to the lack of real defects in production. This means that the full representation of defect properties in the form of physical products can become a significant hurdle in the implementation of ML methods.

Particularly in highly regulated areas such as pharmaceutical production, which follow the principles of "Good Manufacturing Practice" (GMP), it is necessary to be able to guarantee that an inspection system correctly recognizes a specified distribution of defect characteristics as part of risk assessment and addressing. Regulatory requirements often stipulate that a wide range of defects must be detected. This is often only inadequately represented by physically existing, artificially created defects.

ML systems in particular suffer from the risk of learning too specific properties of defects as a criterion, i.e. only recognizing defects of a certain size or position. Closing this gap is therefore a necessary condition for using ML methods in regulated areas. Another risk is the possibility that the model does not recognize the actual defects as a criterion during training, but other, unwanted differences between artificially created defect examples and normal products, such as bottle shape or backlighting. Thus, it is not only the amount of training data that is challenging but also the quality of the training data.

It is an object of the present invention to provide an improved approach for generating training data for training a ML model for use in visual product inspection. Specifically, it is desirable to generate training data to improve accuracy and reliability of a method of inspecting products using a ML model trained with the generated training data.

A solution to this problem is provided by the teaching of the independent claims. Various preferred embodiments of the present invention are provided by the teachings of the dependent claims.

A first aspect of the invention is directed to a, particularly computer-implemented, method of generating training data for training a machine learning model for visual product inspection, wherein the training data are generated to comprise a plurality of first product images associated with a first class and a plurality of second product images associated with a second class. The method comprises obtaining a plurality of defect images, each representing at least one defect that can occur in the product, wherein the plurality of defect images is obtained in such a way to represent a plurality of different defects that can occur in the product, and creating a plurality of combined images. The creating of the plurality of combined images comprises obtaining a product image representing a product without a defect; combining the product image with at least one defect image of the plurality of defect images to obtain a combined image representing the product with at least one defect; and associating the obtained combined image with the second class. The so created plurality of combined images is added to the plurality of second product images.

Accordingly, the method may be considered an approach not only for generating but also for enhancing training data configured for training a machine learning model in visual product inspection as will be explained in more detail below. More specifically, the method includes generation of artificial images to improve the training of machine learning methods in visual inspection. The invention is based on the idea of generating defect images by combining "good images", i.e. images of the product without any defects, and representations of defects. The product image representing a product without a defect may be a product image of the plurality of first product images associated with the first class.

Furthermore, the method not only generates a single image that represents a product with a defect (and is, therefore, associated with the second class) but a plurality of such images which provides a variety of different defect properties. This image data set can then be used to train a ML system, which can then classify real images more reliably. Also, not only the general classification performance of a ML system trained with the so generated training data can be improved, but also the specific risks of an ML system as set forth above can be addressed.

The proposed technical solution makes it possible to create images of defects not only on the basis of physical products, but also with the help of the artificial generation of image material. This allows a much wider range of defect characteristics to be mapped in a cost- and timeefficient manner. This improves and ensures the coverage of defect detection of the ML methods. The training data may be generated to also ensure that the presence of defects is the only difference between defect and good images.

The term "product inspection", as used herein, particularly refers to visual or optical product inspection that is performed as a quality check in order to either let good products pass the check or reject defective products. In particular in the field of pharmaceutical products such product inspection is important for GMP compliance. Product inspection may be done in a product inspection system where products may be conveyed along a transport path that includes an inspection site.

The term "defect", as used herein, particularly refers to any characteristics of a product that may lead to a classification of the product as "defective" and would or should typically lead to rejection of the product. A defect may be any kind of damage, contamination, or the like that would be considered to render the product unusable or unsafe for use. In particular, pharmaceutical products may be provided in glass containers, such as bottles or vials, where a defect may occur, e.g., as a crack in the glass. Also, there may be foreign particles on or in the product. A defect may also be a packaging error, such as error in filling, defective or missing parts of a container, including a lid of the container.

The term "class", as used herein, particularly refers to a "label" that is set beforehand in the training data or later determined by classifier. In particular, a "first class" may be considered to specify non-defective or "good" products, i.e. products that typically pass the quality check and are ready for further processing, whereas a "second class" may be considered to specify any kind of defective products, i.e. products that are typically rejected. It will be appreciated that there may be one or more further classes, e.g., a "third class" which may indicate that a further inspection, e.g., manual inspection by a human inspector is necessary. The product images are "associated with" or "labelled with" one of the classes, which is necessary for the (supervised) training process.

If applicable, the terms "first", "second", "third" and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Where the term "comprising" or "including" is used in the present description and claims, it does not exclude other elements or steps. Where an indefinite or definite article is used when referring to a singular noun e.g., "a" or "an", "the", this includes a plural of that noun unless something else is specifically stated.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

The term "configured", "arranged", or "adapted" to perform a particular function (and respective variations thereof), as may be used herein, is understood to mean that a relevant device or component thereof is already present in a configuration or setting in which it can perform the function or it is at least adjustable - i.e. configurable - in such a way that it can perform the function after appropriate adjustment. The configuration can be carried out, for example, by setting the parameters of a process sequence or switches or similar for activating or deactivating functions or settings. In particular, the device can have several predetermined configurations or operating modes, so that configuration can be carried out by selecting one of these configurations or operating modes.

The terms "a" or "an" as used herein are defined in the sense of "one / one or more". The terms "another" or "a further" and any other variation thereof are to be understood in the sense of "at least one more".

The term "plurality" as used herein, where applicable, shall be understood to mean "two or more".

In the following, preferred embodiments of the method are described, which can be arbitrarily combined with each other or with other aspects of the present invention, unless such combination is explicitly excluded or technically impossible.

In some embodiments, obtaining the plurality of defect images comprises creating a plurality of images of different defects in such a way that the plurality of different defects covers a predetermined distribution of different defects with regards to at least one defect feature. A defect feature (i.e., "property" or "characteristic") may be e.g., the size of the defect, its position on the product, its color, or the like. If training data included only defects of real physical defects, such defects would most likely be available only for selected ranges of features, e.g., only defects of certain sizes rather than one or more defects for a wide range of sizes. The plurality of images of different defects can be created in a controlled manner to cover a predetermined distribution of different defects. Consequently, product inspection can be improved in that a ML model is trained using a known and configurable distribution of defect properties.

In some embodiments, the method further comprises providing at least one defective product image representing a product with a defect, wherein at least one defect image of the plurality of defect images is obtained by extracting a portion of the defective product image comprising the defect. This allows to increase the number of product images including a defect (i.e., associated with the second class) by using existing defective product images. The defective product images may be included in the plurality of second product images or may be separately provided.

The portion of the defective product image comprising the defect may be determined by an image segmentation method. Known image segmentation techniques may be based on pixels, edges, regions, cluster, or models to localize a portion (region) of a product image that includes a defect. This portion may then be cut out from the image by masking it either with or without the respective background to obtain the defect image. The defect image can then be added to a product image without a defect to obtain a combined image as explained above. Image segmentation is a process used in image processing and computer vision to partition an image into multiple regions or segments, where each segment represents a distinct object or area in the image, which may particularly be a defect or area including a defect in the context of the present disclosure.

As briefly pointed out above, there are several approaches to image segmentation, including thresholding, edge-based segmentation, region-based segmentation, clustering-based segmentation, or even deep learning-based segmentation. Thresholding provides a simple method of image segmentation where a threshold value is set, and pixels with intensities above the threshold are considered one segment, while pixels below the threshold are considered another segment. Edge-based segmentation uses the edges of objects in an image to segment the image. Edges are typically detected using algorithms that look for rapid changes in pixel intensity. Region-based segmentation looks for regions of similar pixels in an image and groups them together. This can be done using techniques such as region growing, where seed points are chosen and regions are grown outward from those points based on similarity criteria. Clustering-based segmentation uses clustering algorithms to segment an image based on the similarity of pixels. Deep learning-based segmentation uses deep learning techniques such as convolutional neural networks (CNNs) to segment images. These models are trained on large datasets of images and can learn to segment images with high accuracy. The choice of segmentation method depends on the specific application and the nature of the image. Some methods may be more appropriate for certain types of images or objects, while others may be more computationally efficient. Ultimately, the goal is to produce a segmented image that accurately represents the objects or regions of interest in the original image.

In some embodiments, at least one defect image of the plurality of defect images is obtained by creating an artificial image of a defect using an image creation method. In this way, the number and variety of defects can be increased without the need for actual physical representation of defects. Defect images may be created using ML image creation algorithms, e.g., based on known defects. For instance, GAN (Generative Adversarial Networks) may be used to create new defect images. A Generative Adversarial Network (GAN) is a type of artificial intelligence model used in machine learning for the purpose of generating new data that is similar to the training data provided. GANs consist of two components: a generator and a discriminator. The generator creates new data instances, while the discriminator evaluates the generated data and determines whether it is genuine or fake. GANs have been used in a variety of applications, such as image synthesis, semantic image editing, style transfer, and data augmentation, among others. They have the potential to generate high-quality, realistic data, making them a valuable tool in fields such as computer vision, natural language processing, and autonomous systems. Thus, by using a GAN, a realistic product image with a defect can be created that is suitable for training a ML model in product inspection. Specifically, image-to-image translations with a single generator may be applied in the form of a so-called SingleGAN.

In some embodiments, combining the product image with at least one defect image of the plurality of defect images is carried out by additive digital image processing. In this way, in the combined product image, the defect image may blend into the product image, such that (ideally) the ML model cannot distinguish between a combined product image and a product image with an actual (real) defect. Additive digital image processing may be implemented in various ways, such as by gradient image domain processing (also called "gradient-based image processing" or "Poisson Image Editing"). Poisson Image Editing is a technique used in image processing and computer graphics for seamlessly blending or pasting one image onto another. It is based on the Poisson equation, which is a partial differential equation used to model various physical phenomena, including the flow of heat or fluid. In the context of image editing, the Poisson equation is used to preserve the color and intensity gradients of the original image around the region that is being edited or pasted. This is achieved by solving the Poisson equation for the edited region using the boundary conditions of the original image. The main advantage of Poisson Image Editing over other image editing techniques is that it produces very natural-looking results, with smooth transitions between the edited region and the surrounding areas. However, other additive image editing techniques may be applied in the method of the first aspect of the invention.

In some embodiments, the plurality of different defects comprises defects that differ at least in one of a size, shape, color, position on the product, and type of defect. By providing training data that cover a wide range and distribution of different defects the ML inspection method can be further improved. In particular, as the ML model will learn the variety of different defects, the reliability and accuracy of the ML inspection method can be enhanced.

In some embodiments, for obtaining the plurality of combined images, a plurality of product images representing products without a defect is obtained, wherein the product images of the plurality of product images representing products without a defect differ at least in image characteristics, comprising at least one of a contrast, color, size, shape of the product image or the product represented by the product image. That means, it is advantageous not only to vary the appearance of defects (i.e., to provide various different defects with different properties as set forth above), but also to vary the "good" product images. This may avoid bias to one specific product appearance as the appearance may in reality vary, e.g., because of different lighting conditions, different viewing angles or the like. While a ML model may be trained for a specific type of product (e.g., one shape of container, a specific pharmaceutical product) to provide an efficient method, the training data may include different types of products. This increases the complexity of the model but allows for use of the model for different types of products or on different product inspection systems.

In some embodiments, the method further comprises providing a plurality of abnormal product images, each representing a product without a defect but having at least one irregularity thereon, associating each of the abnormal product images image with the first class, and adding the plurality of abnormal product images to the plurality of first product images. The abnormal product images can be created in a similar way as the combined images as described above. An irregularity may be considered as an appearance of or on the product, which is typically not present on a flawless product, but which is not specified as a defect. In other words, instead of defects, other types of anomalies can also be added, which should not lead to a rejection of the product. For example, slight cosmetic soiling is possible. By better representing such anomalies in the training data, the ML inspection method can be made more robust against such anomalies, and bias of the inspection method can be avoided.

A second aspect of the present invention is directed to a, particularly computer-implemented, method of training a machine learning model for visual product inspection. The method of the second aspect comprises using the training data generated according to the method of the first aspect as input data for the machine learning model, wherein the training data comprise a plurality of first product images associated with a first class and a plurality of second product images associated with a second class, and obtaining an evaluation result as output data from the machine learning model, wherein in the evaluation result each product image is associated with the respective one of the first and second class.

A third aspect of the present invention is directed to a, particularly computer-implemented, method of inspecting products. The method of the third aspect comprises capturing at least one image of the product to be inspected by means of an image capturing device; evaluating the at least one image of the product by means of an evaluation device, the evaluation device applying a machine learning model for classification of the product in one of at least a first and a second class, wherein the machine learning model has been trained according to a method of the second aspect; and outputting an evaluation result specifying the class for the inspected product.

In some embodiments, the method of the third aspect further comprises controlling a processing device depending on the evaluation result, such that the inspected product is further processed along a first or second transport path depending on the evaluation result. More specifically, a product may be either conveyed to a subsequent processing step when classified in the first class or rejected when classified in the second class. Generally, for product inspection, the product(s) can be conveyed along a transport path in a product inspection system, which may branch at or after an inspection site. The inspection site may be a point or area in the product inspection systems, particularly at or along the transport path, covered by the field-of-view of image capturing device. Image capturing may take place during conveying the product, or the product may be stopped for a short period of time to capture the product image(s) for evaluation (classification).

A fourth aspect of the present invention is directed to a system, particularly a product inspection system for visual inspection of products, comprising a data processing system configured to perform the method of the first, second or third aspect. The data processing system might specifically be configured by means of one or more computer programs to perform the method of the first, second or third aspect. In addition, or alternatively, the configuration may be implemented, in whole or in parts by respective hardware. The system further comprises at least one image capturing device configured to obtain at least one image of a product to be inspected, and an evaluation device (possibly as part of the data processing system) configured to evaluate the at least one image of the product in accordance with the method according to the third aspect to classify the product.

A fifth aspect of the present invention is directed to a use of a product inspection system according to the fourth aspect of the invention for automated inspection of products in the form of containers for pharmaceutical or cosmetic products.

A sixth aspect of the present invention is directed to a computer program or a computer program product, comprising instructions, which when executed on a data processing system of a system according to the fourth aspect of the invention cause the system to perform the method according to the first, second or third aspect of the invention.

The computer program (product) may in particular be implemented in the form of a data carrier on which one or more programs for performing the method are stored. Preferably, this is a data carrier, such as a CD, a DVD or other optical medium, or a flash memory module. This may be advantageous, if the computer program product is meant to be traded as an individual product independent from the processor platform on which the one or more programs are to be executed. In another implementation, the computer program product is provided as a file on a data processing unit, in particular on a server, and can be downloaded via a data connection, e.g., the internet or a dedicated data connection, such as a proprietary or local area network. In addition, the computer program(s) may comprise a plurality of interacting individual program modules. In particular, the modules can be configured or in any case can be used in such a way that they are executed in the sense of distributed computing on different devices (computers or processor units) that are geographically distanced from each other and connected to each other via a data network.

The system of the fourth aspect may accordingly have a program memory in which the computer program is stored. Alternatively, the system may also be set up to access a computer program available externally, for example on one or more servers or other data processing units, via a communication link, in particular to exchange with it data used during the course of the execution of the computer program which is used during the execution of the computer program, in particular in the context of carrying out a product inspection by means of the system, or representing outputs of the computer program.

In some embodiments of the system, the evaluation device is configured to perform the evaluation of the captured images to perform the classification on the basis of a machine learning model trained for this purpose, which may in particular comprise a trained artificial neural network. Compared to a rigid (i.e., non-learning) evaluation algorithm, this can achieve greater flexibility with regard to (i) the variety of products to be inspected, (ii) the variety of defects or other classification features to be detected and/or (iii) the inspection conditions (e.g. lighting conditions, temperatures, etc.). A high level of accuracy and/or reliability and thus a high level of quality in product inspection can (also) be achieved in this way, so that the use of human inspectors for product evaluation can be dispensed with without having to fear intolerable quality losses. The training can be carried out in particular in the sense of supervised learning using training data that contains at least a large number of different images of products of the product type or types to be inspected and their respective correct labeling. Specifically, the training data used for the training are generated by a method of the first aspect of the invention.

In some embodiments of the system, the machine learning model is suitable for being trained by means of at least one non-parametric learning method, in particular in the sense of supervised learning. Accordingly, the machine learning model used by the evaluation device for inspection can be trained and/or (continuously) be trained by means of at least one non-parametric learning method, in particular also by the evaluation device itself. To clarify, it should be noted here that the terms "parameterized" and "non-parameterized" refer to the machine learning model (training result), but not to the machine learning algorithms themselves (i.e. not to parameters such as k-values, iteration, weighting or regularization parameters). The machine learning model can also be parameterized in non-parameterized learning methods and often is. However, the structure of the function mapping the input values to one or more output values is not specified before training by means of a specific number of parameters; instead, this number is determined dynamically at training runtime. This means that the model structure is not defined by a predetermined function with fixed parameters but is determined from the training data for each prediction. Non-parameterized learning methods include, in particular, k-nearest-neighbors algorithm (KNN), decision tree classification / regression and non-linear support vector machines (RBF Kernel SVM).

In some embodiments, the evaluation device is configured to control the product inspection system depending on the result of the classification by transmitting corresponding control data to the product inspection system in order to cause it to further treat the respective product depending on the class assigned to the respective product as part of the classification. In this case, the product inspection system can therefore be controlled in a particularly efficient and error-free manner without the integration of a human-machine interface on the product inspection system.

In some embodiments of the system, the evaluation device is configured to cause the product inspection system to label and/or eject the respective product as a good part if the product has been assigned to a class for defect-free products in the course of the classification ("first class").

In some embodiments of the system, the evaluation device is configured to cause the product inspection system to label and/or eject the respective product as a defective part if the product has been assigned to a class for defective products during the classification process ("second class").

The two immediately preceding embodiments can usefully be provided, in particular in combination, so that the classification comprises a division of the inspected products into faultless good parts on the one hand and faulty defective parts on the other. This is particularly advantageous if the converted product inspection system is used as part of quality control or quality assurance, for example as part of an inspection after manufacture, prior use or modification (in the case of containers, e.g. filling or sealing) of the products.

In some embodiments of the system, the evaluation device is configured to cause the product inspection system to subject the respective product to a further inspection if the product has been assigned to a class for products to be further inspected as part of the classification process ("third class"). This can be provided in particular in addition to the aforementioned classes for good parts and/or defective parts. For example, the class for products requiring further inspection can be assigned during classification if a sufficiently error-proof classification as a good part or defective part is not yet possible on the basis of the inspection that has already taken place and an additional inspection is therefore indicated, either to improve the statistical significance of the inspection result by repeating an inspection of the same type or to carry out an additional inspection of a different type (e.g. using a different image recording method, different lighting or from a different image sensor perspective) in order to ensure a high overall inspection quality.

In some embodiments, the evaluation device is configured to evaluate images of products in the form of containers for pharmaceutical or cosmetic products in order to classify such products as part of the classification. Due to the typically very high product quality requirements and production volumes for pharmaceutical or cosmetic products, these applications are particularly dependent on high-quality and high-throughput product inspection systems.

In some embodiments, the image sensor system (i.e., image capturing device) has a plurality of identical or different image sensors (e.g., cameras) for recording the images such that for each of the products presented, at least one image can be recorded by each of a plurality of the image sensors and made available for evaluation by the evaluation device.

In particular, at least two of the image sensors can differ from each other with regard to at least one of the following properties: Position and/or orientation of their optical axis, sensitive wavelength range for recording the respective images, ability to record image sequences or still images, formation of difference images related to a reference image or another image of a recorded image sequence, ability to and, if necessary, type of pre-processing of recorded images prior to their output to the evaluation unit. In this way, different images can be used as inputs for the evaluation, in particular in the sense of sensor fusion, in order to further increase the quality of the product inspection.

The explanations, embodiments and advantages described above in connection with the method of the first aspect likewise apply to the other aspects of the invention and vice versa.

Further advantages, features and applications of the present invention are provided in the following detailed description and the appended drawings, wherein:
**Fig. 1** schematically illustrates a product inspection system in accordance with an embodiment;
**Fig. 2** schematically illustrates a method of generating training data in accordance with an embodiment;
**Fig. 3** illustrates an example of obtaining a combined product image;
**Fig. 4** illustrates a distribution of defect properties in training data generated with the method shown in Fig. 2;
**Fig. 5** illustrates examples of generated product images; and
**Fig. 6** shows examples of various product image (defective and abnormal/non-defective).

In the figures, the same reference signs denote identical, similar or mutually corresponding elements. Elements shown in the figures are not necessarily to scale. Rather, the various elements shown in the figures are reproduced in such a way that their function and general purpose can be understood by a person skilled in the art. Connections and couplings between functional units and elements shown in the figures can also be implemented as indirect connections or couplings, unless explicitly stated otherwise. Functional units can be implemented in particular as hardware, software or a combination of hardware and software.

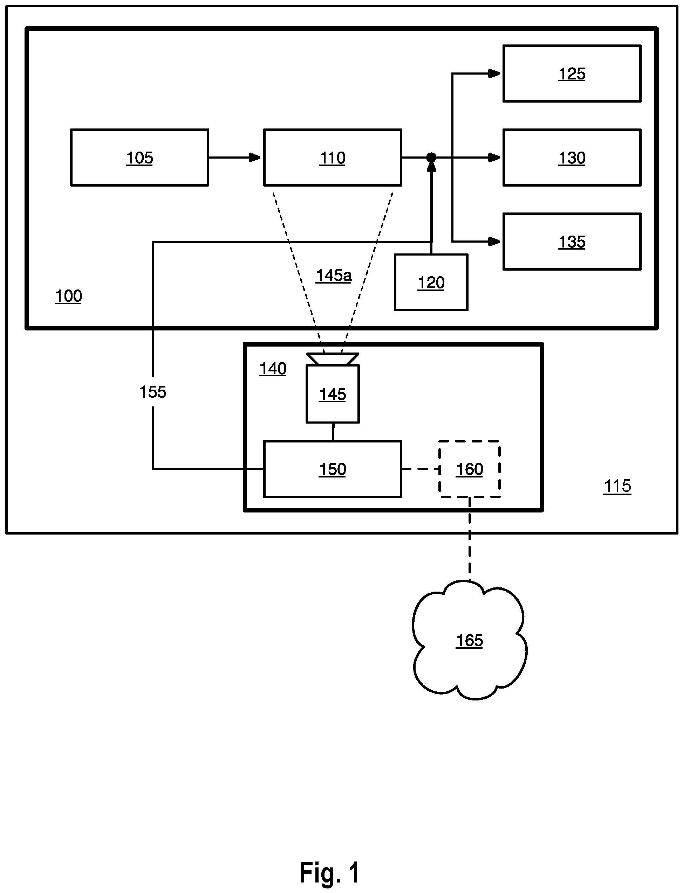

**Fig. 1** shows a product inspection system 115. It has a transport system 100 with a feed section 105 for products to be inspected, for example containers for pharmaceutical or cosmetic products, such as liquid, pasty or tablet medicines. The feed section 105 leads to an inspection site 110 for automatic visual inspection of the products, wherein the inspection site 110 is located within a field of view (observation field) 145a of a camera 145. By means of a processing device 120, further treatment of the inspected products is controlled depending on an evaluation result as will be described in more detail below. In particular, the control can be carried out in such a way that the respective product is directed to a transport path 125 (of the transport system 100) for products classified as defective parts and thus ejected or instead directed to another transport path 130 (of the transport system 100) for products classified as good parts, which can, for example, lead to further work stations of a production line, such as a filling or packaging station (not shown).

In the illustrated exemplary embodiment, the product inspection system 115 has a product inspection unit 140 in addition to the transport system 100. It will be appreciated that this layout of the product inspection system 115 is merely exemplary and that the product inspection unit 140 or parts thereof may also be arranged elsewhere in the product inspection system 115 or in or on the transport system 100. The product inspection unit 140 has an image capturing device (image sensor system) with the camera 145 with its field of view (FOV) 145a, in which the inspection site 110 is located as mentioned above, so that the camera 145 can capture images of the products present in the inspection site 110 and convert them into image data representing the images.

It will be appreciated that at least one further image sensor can be provided in the form of at least one further camera (not shown), which is also arranged such that the inspection site 110 lies in its field of view, so that it can capture images of the products presented there. The further camera may be identically configured like the first camera 145 and substantially only differ from it by a different perspective or a different setting (e.g. zoom, aperture, etc.), or it may be of a different configuration. In particular, it can cover a different wavelength range (e.g., as an infrared or UV camera) or be a depth camera, for example of the time-of-flight (TOF) type. Image data of both cameras can be merged in the sense of a sensor fusion in order to perform a classification of the respective product represented by the image data. In particular, the image data from both cameras can each be used as input data for a trained artificial neural network (or another machine learning model) used for evaluation.

The product inspection unit 140 further comprises an evaluation device 150, which may in particular include one or more processors and one or more computer programs capable of running thereon, by means of which the image data can be evaluated in order to analyze the products on the basis of the image data, in particular with regard to the possible presence of defects. The evaluation can optionally also be transferred or outsourced in whole or in part to external computing resources 165 that can be connected via a communication interface 160.

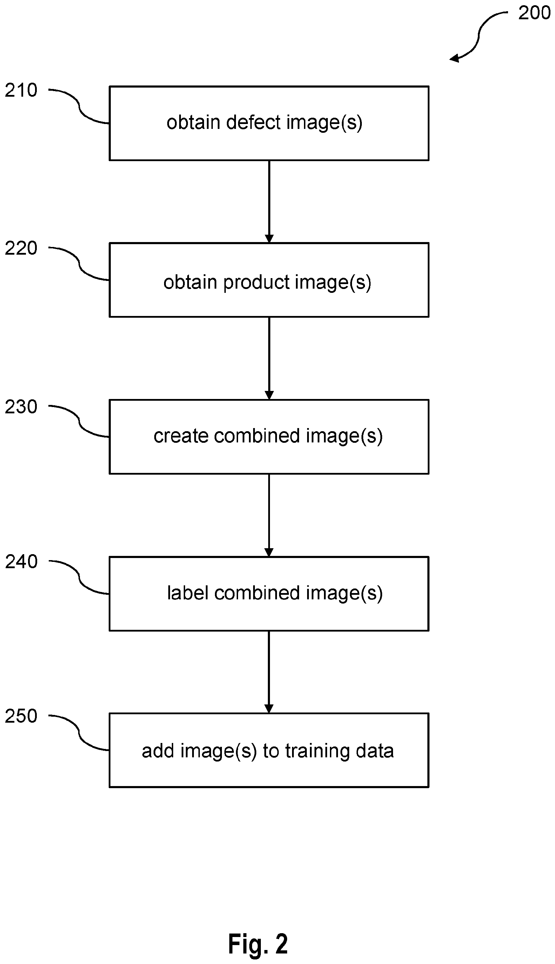

The evaluation device 150 is further configured (in particular on the basis of the computer program or programs) to generate control information depending on the results of the evaluation, specifically on the classification of the respective product as a good part (i.e. as a first class) or a defective part (i.e. as a second class) or (optionally) as a part to be further inspected (i.e. as a third class) and to transmit this control information via a communication link 155 (e.g. wired or optical) to the transport system 100 (or the processing device 120) in order to control the transport of the product. The evaluation in the evaluation device is carried out using a machine learning model that has been trained with training data before productive use. Generation of training data is explained in more detail below, particularly with respect to Fig. 2.

The transport system 100 can be controlled for a respective product inspected on the basis of its image data in such a way that the product (i) is directed to the transport path 125 if it has been classified as a defective part, (ii) is directed to the transport path 130 if it has been classified as a good part, or (iii) is directed to a further transport path 135 if it has been classified as a part to be further inspected. The transport path can be designed in particular in such a way, for example as a loop, that the products directed there are directed back into the presentation area 110 in order to be inspected again there. However, it is also possible for another inspection to be carried out instead, in addition to the inspection already carried out, in which case an associated inspection device (not shown) can be arranged directly on the transport path 135 in particular.

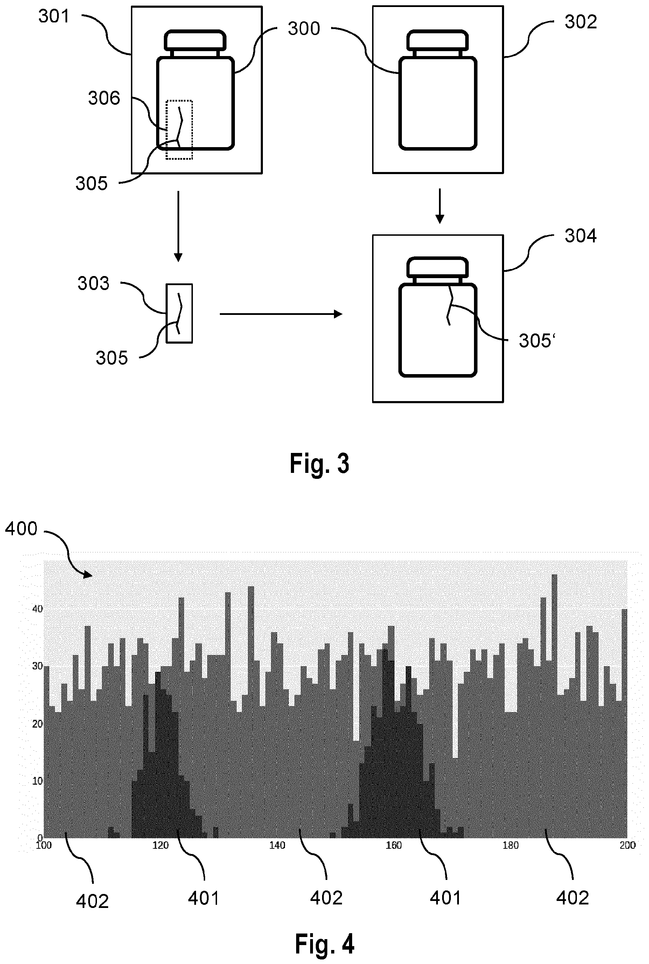

**Fig. 2** shows a flow chart of an embodiment of a method 200 of generating training data for the ML model used in the evaluation device 150 of the product inspection system 115. The method 200 is explained referring also to the exemplary product images shown in Fig. 3. In order to enhance the training data, combined product images 304 are created by a combination of defect representations and good products using additive processes. Defect representations can be simple image sections of defects or algorithmic image processing steps that are used to generate defect images.

In a step 210 defect images 303 are obtained. In particular, a plurality of defect images 303 is obtained to cover a wide variety of different defects 305, e.g., with respect to their size, shape, color, position or other appearance that might occur as a defect 305 in a product 300. The defect images 303 can be obtained by cutting out a portion 306 of a defective product image 301. This can be carried out by means of segmentation techniques known in image processing, such as pixel or edge-based algorithms. These defect images 303 ("defect representation) can be modified in a separate step to increase variance. For example, size, color, or shape can be changed.

In a step 220 (which may also be executed before or at the same time as step 210) one or more product images, more specifically non-defective product images 302 ("good images") are obtained. The defect representation 303 and a good image 302 are then combined using an additive image processing method, such as "Poisson image editing". This combination generates a new image 304 ("combined image"), which is labeled as "defective product image" (step 240) and then added to the training data (step 250). Ideally, this new combined image 304 is indistinguishable from an actual image captured by the camera 145 of the product inspection system 115. As can be seen from Fig. 3, the defect 305' in the combined image 304 is in a different location compared to the defect 305 in the defective product image 301.

By generating a large number of images 304 in this way, a new and enhanced data set can be created (i.e., the training data). Both, the properties of the defect representations 303, including the position, and the underlying good images 302 can be varied to guarantee an arbitrary degree of variation in the data set. The fact that the properties of the defects 305 can be specified very precisely opens up the possibility of controlling the distribution of these properties in the entire training data. Therefore, if there are gaps in the data generated using the physical products (cf. distribution 401), these can be filled, or a completely new training data set can be generated. An example distribution 400 of defects is shown in **Fig. 4****.** The chart shows the number of defects (y-axis / ordinate) for various defect sizes (x-axis / abscissa). The distribution 400 covers a wide range of defect sizes. This is achieved by adding the combined images 304 with a distribution 402.

The method 200 may not only be used to generate training data, but also test data and validation data. The `training data set' trains a neural network that is used in the evaluation device 150 to classify an inspected product as "good" or "defective". The 'test data set' is used to test the results of the trained algorithm, which helps to improve the performance of the deep learning system by optimizing the data. The `validation data set' will not be touched or optimized. It will be used to ensure results of the algorithm are replicable and have not accidentally been optimized for the `test data set'.

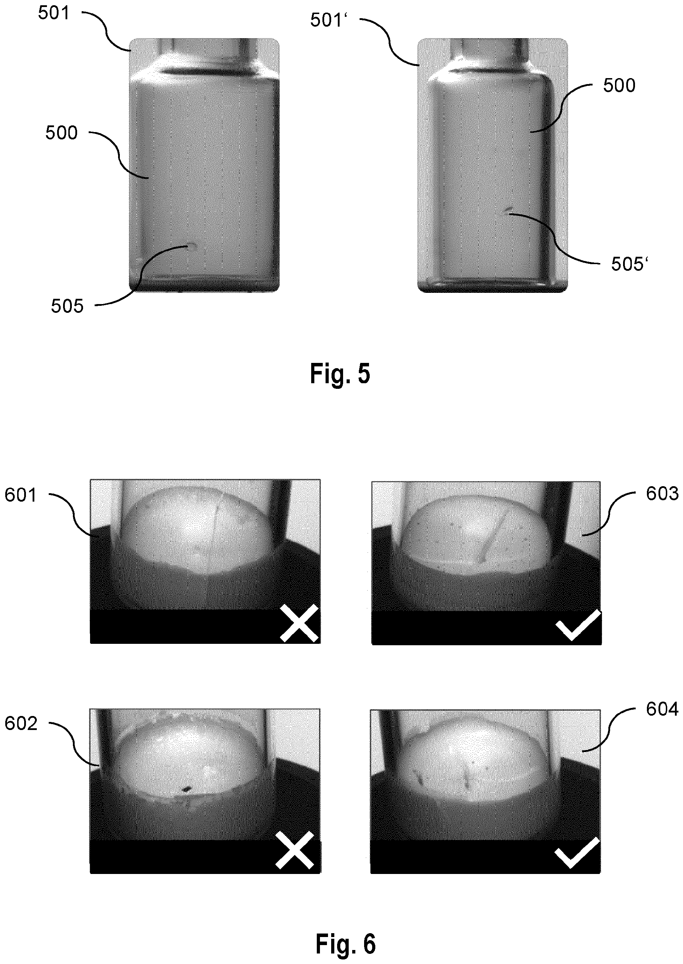

In **Fig. 5** further examples of defective product images 501, 501'. These images are created using GANs. They show a product 500 in the form of a glass bottle with a defect 505, 505', such as an enclosed air bubble in the glass. The images 501, 501' can be based on good product images and/or defective product images. Using GANs for image creation allows to further increase the variety of defect representations to enhance the training data. In contrast to the process of obtaining defect representations as described above, the defect representations in the images 501, 501' are not obtained by cutting out defects of actual defective product images, but they are artificially generated. As the images 501, 501' are generated by GANs, they are likewise ideally indistinguishable from an actual image captured by the camera 145 of the product inspection system 115.

**Fig. 6** shows examples of product images and their respective label that shall be detected by the product inspection system. Images 601 and 602 are defective product images. These products must be classified as "defective", and the respective products must be rejected. In image 601 there is a crack in the class container, and in image 602 there is a foreign particle inside the container on the pharmaceutical product. In contrast to that, images 603 and 604 show "abnormal" but non-defective products. These should not be rejected by the product inspection system. Image 603 shows a glass container with a pharmaceutical product in the form of a so-called "lyocake". A lyocake (short for "lyophilized cake") is a product made from lyophilization, which is a technology that involves a low temperature drying process. The lyocake appearance may be an indicator of whether the product is good or is to be rejected. In image 603 the lyocake has a crack, which however does not affect the quality of the product although it looks at first glance similar to a crack in the glass as in the image 601. Image 604 shows a product with slight contamination on the outside of the glass container. This product should not be rejected either. By adding such "abnormal" product images to the training data, a bias of the training can be avoided or reduced as the ML model learns that a good or non-defective product is not necessarily only a "flawless" product but may have some anomalies thereon that do not affect the overall quality of the product. This also contributes to avoid high rates of "false rejects".

While above at least one exemplary embodiment of the present invention has been described, it has to be noted that a great number of variations thereto exists. Furthermore, it is appreciated that the described exemplary embodiments only illustrate non-limiting examples of how the present invention can be implemented and that it is not intended to limit the scope, the application or the configuration of the herein-described apparatuses and methods. Rather, the preceding description will provide the person skilled in the art with constructions for implementing at least one exemplary embodiment of the invention, wherein it has to be understood that various changes of functionality and the arrangement of the elements of the exemplary embodiment can be made, without deviating from the subject-matter defined by the appended claims and their legal equivalents.

### LIST OF REFERENCE SIGNS

- 100: Transport system
- 105: Product infeed
- 110: Product inspection site
- 115: Product inspection system
- 120: Processing device
- 125: Transport path for ejected products classified as defective parts
- 130: Transport path for products classified as good parts
- 135: Transport path for products classified as requiring further inspection
- 140: Product inspection unit
- 145: Image sensor (camera)
- 145a: Observation field of the image sensor
- 150: Evaluation device
- 155: Communication link for control information
- 160: Communication interface
- 165: External computing resources, e.g. server or computer network
- 200: Method of generating training data
- 210 - 250: Steps of the method 200
- 300: Product
- 301: Defective product image
- 302: Non-defective product image
- 303: Defect image
- 304: Combined image
- 305: Defect
- 306: Image portion with defect
- 400: Distribution of defect feature
- 401: Real (physical) defects
- 402: Generated defects
- 500: Product
- 501: Defective product image
- 505: Defect
- 601: Defective product image
- 602: Defective product image
- 603: Abnormal, but non-defective product image
- 604: Abnormal, but non-defective product image

## Claims

1. A method (200) of generating training data for training a machine learning model for visual product inspection, wherein the training data are generated to comprise a plurality of first product images associated with a first class and a plurality of second product images associated with a second class, the method comprising:
- obtaining a plurality of defect images (303), each representing at least one defect (305) that can occur in the product (300), wherein the plurality of defect images (303) is obtained in such a way to represent a plurality of different defects (305) that can occur in the product (300);
- creating a plurality of combined images (304), wherein the creating of the plurality of combined images (304) comprises:
- obtaining a product image (302) representing a product (300) without a defect;
- combining the product image (302) with at least one defect image (303) of the plurality of defect images (303) to obtain a combined image (304) representing the product (300) with at least one defect (305); and
- associating the obtained combined image with the second class; and
- adding the plurality of combined images (304) to the plurality of second product images.

2. The method of claim 1, wherein obtaining the plurality of defect images (203) comprises creating a plurality of images of different defects (305) in such a way that the plurality of different defects (305) covers a predetermined distribution (400) of different defects (305) with regards to at least one defect feature.

3. The method of claim 1 or 2, further comprising providing at least one defective product image (301) representing a product (300) with a defect (305), wherein at least one defect image (303) of the plurality of defect images (303) is obtained by extracting a portion (306) of the defective product image (301) comprising the defect (305).

4. The method of claim 3, wherein the portion (306) of the defective product image (301) comprising the defect (305) is determined by an image segmentation method.

5. The method of any one of the preceding claims, wherein at least one defect image of the plurality of defect images is obtained by creating an artificial image of a defect using an image creation method.

6. The method of any one of the preceding claims, wherein combining the product image (302) with at least one defect image (303) of the plurality of defect images is carried out by additive digital image processing.

7. The method of claim 6, wherein the additive digital image processing is implemented by gradient image domain processing.

8. The method of any one of the preceding claims, wherein the plurality of different defects (305) comprises defects that differ at least in one of a size, shape, color, position on the product, and type of defect.

9. The method of any one of the preceding claims, wherein for obtaining the plurality of combined images (304), a plurality of product images (302) representing products (300) without a defect is obtained, wherein the product images (302) of the plurality of product images representing products (300) without a defect differ at least in image characteristics, comprising at least one of a contrast, color, size, shape of the product image or the product represented by the product image.

10. The method of any one of the preceding claims, further comprising:
- providing a plurality of abnormal product images (603, 604), each representing a product without a defect but having at least one irregularity thereon;
- associating each of the abnormal product images (603, 604) image with the first class; and
- adding the plurality of abnormal product images (603, 604) to the plurality of first product images.

11. A method of training a machine learning model for visual product inspection, the method comprising:
- using the training data generated according to the method (200) of any one of the preceding claims as input data for the machine learning model, wherein the training data comprise a plurality of first product images associated with a first class and a plurality of second product images associated with a second class;
- obtaining an evaluation result as output data from the machine learning model, wherein in the evaluation result each product image is associated with the respective one of the first and second class.

12. A method of inspecting products, the method comprising:
- capturing at least one image of the product to be inspected by means of an image capturing device (145);
- evaluating the at least one image of the product by means of an evaluation device (150), the evaluation device (150) applying a machine learning model for classification of the product in one of at least a first and a second class, wherein the machine learning model has been trained according to a method of claim 11; and
- outputting an evaluation result specifying the class for the inspected product.

13. The method of claim 12, further comprising controlling a processing device (120) depending on the evaluation result, such that the inspected product is further processed along a first or second transport path (125, 130) depending on the evaluation result.

14. A product inspection system (115) for visual inspection of products, comprising a data processing system configured to perform the method of any one of claims 1 to 13, at least one image capturing device (145) configured to be obtain at least one image of a product to be inspected, and an evaluation device (150) configured to evaluate the at least one image of the product in accordance with the method of claim 12 or 13 to classify the product.

15. Use of a product inspection system according to claim 14 for automated inspection of products in the form of containers for pharmaceutical or cosmetic products.
